# EUROPEAN PATENT SPECIFICATION

(11) **EP 0 749 202 B1**
(45) Date of publication and mention of the grant of the patent: **29.09.2004**
(21) Application number: 95630060.2
(22) Date of filing: 12.06.1995
(51) Int. Cl.: H02P 5/05, H02P 7/05

(54) **Current decay control in switched reluctance motor**
Abklingkontrolle für den Strom in einem geschalteten Reluktanzmotor
Régulation de la décrossance de courant dans un moteur é réluctance commuté

(43) Date of publication of application: 18.12.1996
(73) Proprietor: EMERSON ELECTRIC CO., St. Louis Missouri 63136 (US)
(72) Inventor: Horst, Gary Edward, Manchester, Missouri 63021 (US)
(74) Representative: Hale, Peter

(56) References cited:
- WO-A-93/05564
- WO-A-94/28618
- PROCEEDINGS OF THE IECON'93, vol. 2, 15 November 1993 - 19 November 1993 HAWAII, pages 676-682, XP 000428144 F. BLAABJERG ET AL 'Digital Implemented Random Modulation Strategies for AC and Switched Reluctance Drives'
- IAS'93, vol. 1, 3 October 1993 - 8 October 1993 TORONTO CA, pages 106-113, XP 000427437 C.Y. WU ET AL 'Analysis and Reduction of Vibration and Acoustic Noise in the Switched Reluctance Drive'

## Description

### Background of the Invention

This invention relates to switched reluctance (SRM) motors and, more particularly, to a current decay control circuit for such motors.

Switched reluctance, or SRM motors are well-known in the art. One problem with operating these motors is noise caused by the recovery of current in the motor phase windings as each phase is switched at the end of its cycle. It will be understood that the current representing the energy input of a particular phase is supplied to the phase windings during that phase's active portion of a switching cycle. As the motor is switched from one phase to another, the residual energy in the deactivated winding decays off. This energy typically represents approximately thirty percent (30%) of the energy supplied to the phase winding during its active period and is referred to as the "tail decay energy". Since the phase winding is an inductive element, it attempts to maintain the current flow through the winding; even though the energy must be substantially dissipated before the winding is re-energized during the next phase cycle. Accordingly, the decay must be a rapid decay. One effect of this energy reduction is the ringing effect which is caused at the transition between the active and inactive portions of the phase current curve. This can be seen as the abrupt transition in slope in the current curve between the shallow slope representing the active portion of the cycle and the steep slope where the current is driving to zero when the phase becomes inactive. The result of this ringing or transfer of forces into the motor frame causes noise, and this noise is on the order of 50dBa.

Commutation circuits are used to control switching between motor phases as a function of various motor operating parameters. Such circuits typically employ a pulse width modulator (PWM). PWM circuits, in addition to controlling the application of voltage to the motor phases can also be used to control the residual current decay. These circuits operate to control this decay in accordance with a defined algorithm. However, it is a drawback of these decay control circuits that they use a conventional 100% forced commutation decay; and, as such, they tend to aggravate the noise problem. One attempt at decay is suggested by C. Y. Wu and C. Pollock in their paper **Analysis and Reduction of Vibration and Acoustic Noise in the Switched Reluctance Drive**, published in IAS'93, Vol. 1, October 3, 1993-October 8, 1993, TORONTO, CA, pages 106-113.

The approach described in this paper involves a zero voltage decay of the current in a phase winding, when the phase is switched "off", over a period equal to one-half the resonant time period of the motor, and with a subsequent forced commutation of the remainder of the "off" time. The drawback with this approach is that there is but one decay interval divided into two segments. As a result, the degree of control over the slope of the curve as the current is driven to zero is not as flexible in significantly reducing the noise.

While the above approach may be effective, there are nonetheless other approaches which may be more effective to facilitate tail decay while reducing noise.

Nevertheless, other approachs are disclosed in WO-A-9428618.

### Summary of the Invention

Among the several objects of the present invention may be noted the provision of a control circuit for controlling the residual or tail current decay in a motor winding; the provision of such a control circuit which controls tail current decay so as to lessen motor noise at least 10dBA from current noise levels; the provision of such a control circuit which integrates both hard chopping and soft chopping current decay control techniques; the provision of such a current control circuit which provides both types of chopping using but a single gate drive; the provision of such a control circuit which is usable with both 2-phase and 3-phase SRM's such as a 12-6, 2-phase SRM and a 6-4, 3-phase SRM; the provision of such a control circuit which is readily incorporated into a PWM type controller for controlling overall average voltage applied to the respective phases of a SRM; the provision of such a control circuit which reverses the pulse width characteristics of a PWM signal used to control current flow when a winding phase is inactive thereby to help slow the rate at which current goes to zero while the phase is inactive; the provision of such a control circuit employing two sets of switches one set of which is either activated or deactivated as the motor phases are switched and the other set of which is modulated by PWM signals; the provision of such a control circuit to control both the frequency and/or duty cycle of PWM signals when a phase is switched from active to inactive thereby to better control the slope of the curve of the decay current; The provision of such a control circuit which controls switching of the winding between energy recovery and energy dissipation circuits to drive the residual current to zero; the provision of such tail current control circuit which is additionally effective to help reduce noise in SRM's operating at low speed/high torque conditions where normalized ovalizing forces which also produce noise in SRM's are lower than at high speed/low torque motor operating conditions; the provision of such a control circuit to employ a microprocessor which can produce a wide range of decay schedules based upon particular motor conditions; the provision of such a control circuit which can operate at frequencies at least twice the resonant frequency of the motor; and, the provision of such a control circuit which is a low cost reliable circuit which functions to reduce noise throughout the range of SRM operation.

According to the invention, these objects are achieved by the circuit and method of the independent claims. Embodiments of the invention are claimed in the dependent claims.

In accordance with the invention, generally stated, a control circuit is used for controlling residual or tail current decay in a single or polyphase SRM. A Hall-effect type magnetic sensor senses rotor position of the SRM. Current flows through the winding when the motor phase represented by the winding is active; and, current flow into the winding ceases when the phase becomes inactive. Semiconductor switches direct current flow into the winding when the phase is active and also help recover or dissipate residual energy in the winding when the phase becomes inactive. This is accomplished by switching the winding between an energy recovery circuit and an energy dissipation circuit in a defined manner. A PWM signal generator provides PWM operating signals to the switches to control current flow into the winding and its subsequent recovery or dissipation. A PWM control module, or microprocessor with PWM output, is responsive to the Hall sensor for controlling operation of the PWM signal generator. As a result, the signal generator provides PWM signals having signal characteristics which differ between when there is current flow to the winding and when there is not. The frequency and duty cycle of the PWM signals when the phase is inactive are variable to control the slope of current decay and reduce motor noise. Other objects and features will be in part apparent and in part pointed out hereinafter.

### Brief Description of the Drawings

Fig. 1 is a graph depicting the current waveform in one phase of a SRM and illustrates tail current decay in the current waveform;
Figs. 2A and 2B are graphs of SRM phase current and voltage waveforms respectively and illustrate a soft chopping operation of a current controller for the SRM;
Figs. 3A and 3B are graphs similar to Figs. 2A and 2B but for hard chopping operation of the current controller;
Figs. 4A-4C illustrate a gate signal used for soft chopping during the power "on" portion of a SRM phase (Fig. 4A), as well a simplified schematic of the circuit for both the power "on" (Fig. 4B), and power "off" or current decay portions (Fig. 4C) of the phase;
Figs. 5A-5C represent an inverted gate signal used during the phase "off" mode of motor operation (Fig. 5A) and simplified schematics of soft chop (Fig. 5B) and hard chop (Fig. 5C) circuits for current decay;
Fig. 6 is a schematic of a first embodiment of tail current decay control circuit of the present invention;
Fig. 7A is a schematic of a portion of the signal generating modules for producing operating signals used to provide hard and soft chopping of the tail current;
Fig. 7B represents a microprocessor with PWM output capability for producing operating signals used to provide the hard and soft chopping;
Fig. 8 is a graph similar to Fig. 1 and represents a prior art tail current decay scheme;
Figs. 9A is another graph similar to Fig. 1 and represents the tail current decay scheme as implemented by the present invention, and Fig. 9B represents an enlarged portion of the tail current decay;
Fig. 10 is a graph illustrating the reduction in motor ringing achievable with the present invention; and,
Figs. 11A-11D represent various PWM frequency and duty cycle combinations by which current decay is controlled.

Corresponding reference characters indicate corresponding parts throughout the drawings.

### Description of Preferred Embodiments

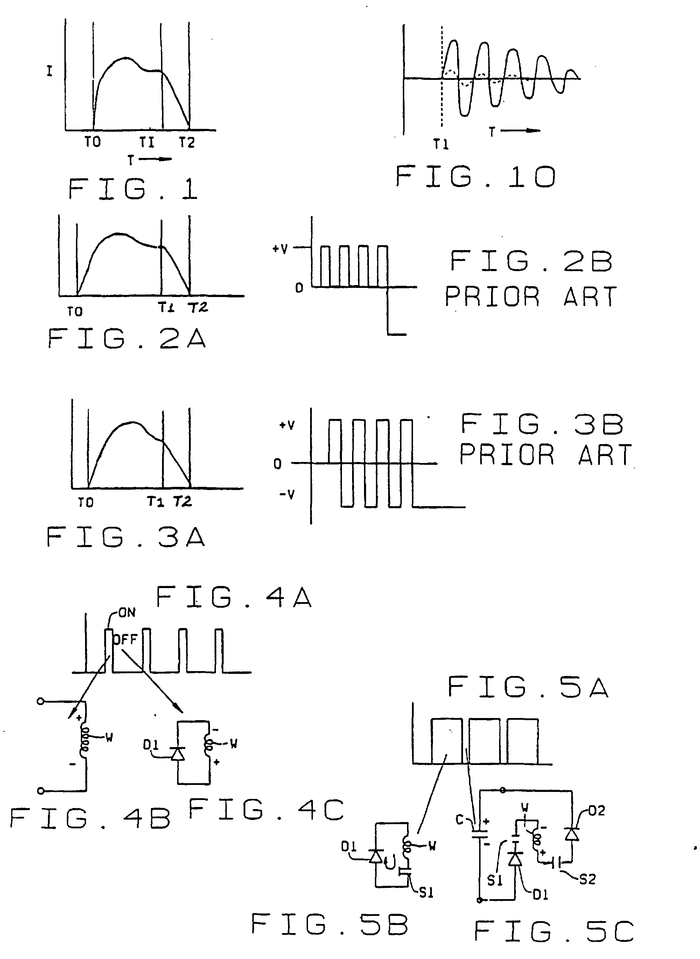

Referring to the drawings, a switched reluctance motor (not shown) is a motor having 1,2,3,4, or 5 phases and is typically a multiple pole motor. Examples of such motors are a 12-6, 2-phase motor, or a 6-4, 3-phase motor. In operation, each respective phase is energized and de-energized in a sequential manner. The length of time each phase is active is based on various operating parameters and various control schemes have been implemented to determine when switching should occur from one phase to the next. During the interval a phase is active a phase winding W of that phase is supplied current. An idealized current profile for the winding is shown in Fig. 1. As depicted in the graph, power to the phase (current to the winding) commences at time T₀. Current is then applied to winding W until a time T₁ at which time the particular phase is deactivated or de-energized. As indicated in Fig. 1, there is a significant amount of energy in winding W at this time, and this residual energy must now be recovered or dissipated prior to the phase being reactivated. The current flow which occurs through the phase at this time is a zero volt, tail current decay flow of current and the current flow takes place during the interval from T₁-T₂.

As shown in Fig. 1, when current input into the phase stops at time T₁, the slope of the curve is relatively shallow. However, the slope of the curve as the tail current is driven to zero is very steep. It is known that as the rotor teeth of a motor sweep past the motor's stator teeth, a deflection is caused by the ovalizing forces generated within the motor. When this deflection is accompanied by the abrupt transition in energy which occurs at time T₁, the result is a pronounced ringing which is shown by the solid line curve in Fig. 10. This ringing produces noise. There are two ways of reducing the residual or tail current to zero. One such way is to reduce the current gradually; i.e., try to create a shallow slope of the curve from T₁ to T₂. The other way is to drive the current down abruptly; i.e., to effect a steep curve. The first technique is referred to as soft chopping and the latter as hard chopping. The problem with using soft chopping exclusively is that although it results in less noise, it takes too long. Residual current cannot reach zero before time T₂. The problem with hard chopping is that although current is driven to zero by time T₂, this approach creates the ringing referred to above.

In Fig. 2A, a current waveform similar to that shown in Fig. 1, shows current chopped in accordance with the "soft" chopping technique. That is, a pulse width modulated signal having an amplitude range of 0v.- +Vv. is applied to the phase current. It will be noted that a ripple is produced on the current even during the active portion of the base. Again, a drawback with this approach is the very slow rate at which current is driven to zero.

In Figs. 3A and 3B, the approach known as "hard" chopping is represented. As shown in Fig. 3B, hard chopping differs from soft chopping in that the pulse width modulated signal has an amplitude ranging from -Vv.-+Vv. Application of this signal to the phase has the effect of driving the current toward zero faster than is possible with the soft chopping signal approach. However, a greater ripple is imposed on the current supplied to the phase winding even during the active portion of the phase; and, the forces produced by this increased down driving of the current . increases motor noise.

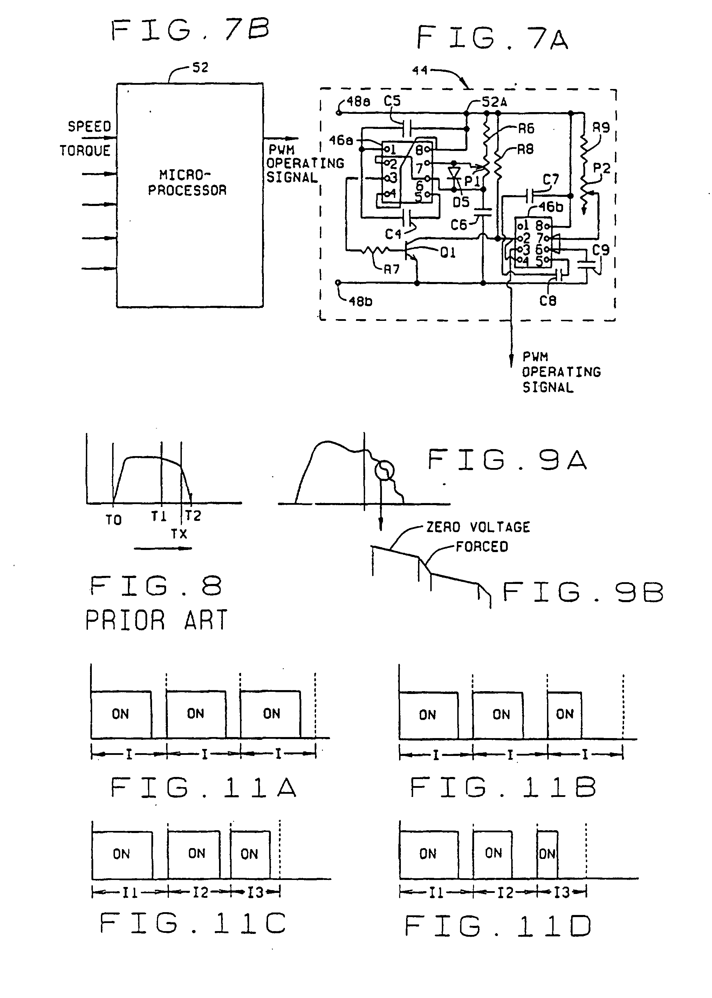

A third approach is shown in Fig. 8 and reflects the approach by Messers Wu and Pollock in their paper referred to above. As before, current is applied to a phase winding W from time T₀-T₁. From time T₁ to a time Tₓ, current is allowed to zero volt decay (i.e., there is no signal applied to the phase to drive the current toward zero) which corresponds to soft chopping. From time Tₓ to time T₂, a forced commutation signal is applied to the phase to complete driving the current to zero. This corresponds to hard chopping. The interval from T₁-Tₓ is a period equal to one-half the resonant time period of the motor. The effect of this approach is to make the slope of the curve from time T₁-Tₓ shallower than would occur if the current were merely hard chopped to zero. This has the effect of reducing the ringing. After this initial period, the current is hard driven to zero. However, because some of the energy in the phase is dissipated by the time hard driving occurs, the noise produced by the ringing is less pronounced. While beneficial, this approach is limited because there is only one soft driving and one hard driving period within the interval T₁-T₂. This limits the degree of control which could be effected to further reduce ringing and noise.

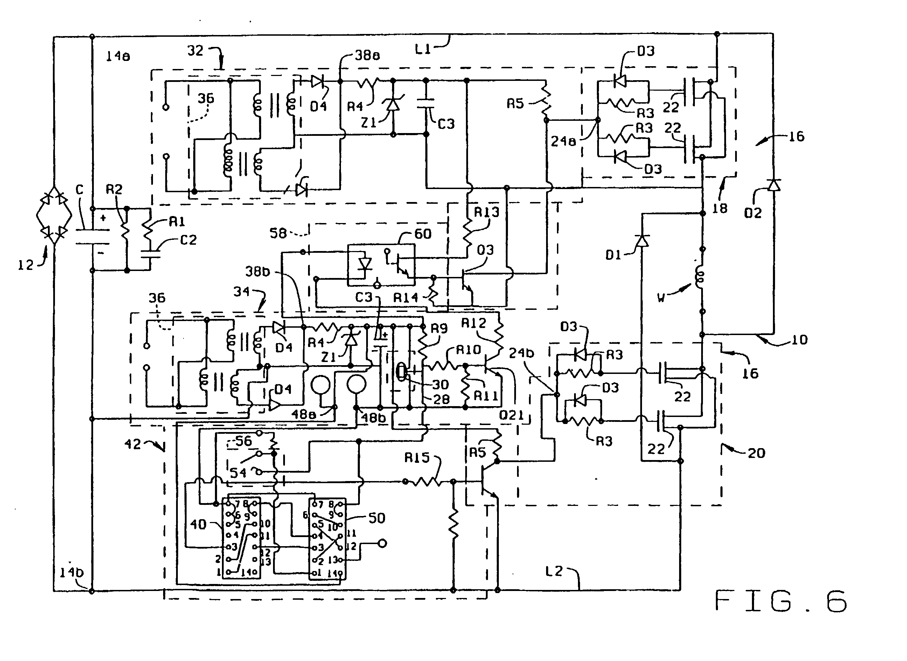

A circuit of the present invention for controlling residual or tail current decay in a phase winding W of a polyphase SRM is indicated generally 10 in Fig. 6. It will be understood that while the following description relates to tail current decay control for one motor phase, circuit 10 is operable with respect to all motor phases. As described, current and voltage are applied to the phase winding during each interval when the phase is active, the voltage and current being cut-off from the phase winding when the phase becomes inactive. The remaining energy in the phase winding is then recovered or dissipated depending upon a circuit configuration in which the winding is connected. A first circuit configuration includes the bus capacitor C, which is connected to phase winding W when the phase is inactive, to recover energy from the phase winding. The capacitor is connected in parallel with a series connected resistor and capacitor R1 and C2. These circuit elements are also parallel connected with a resistor R2. Resistor R1 is, for example, a 10 ohm resistor, resistor R2 a 100K ohm resistor, and capacitor C2 a 0.22 microfarea capacitor. Resistor R2 is used to trickle down energy in the capacitor C when the drive is off. Resistor R1 and capacitor C2 form a high frequency filter against voltage spikes which otherwise cause noise in the circuit.

In Fig. 6, winding W is shown connected between rails L1 and L2 via diodes D1 and D2. The diodes and winding form a forced commutation or energy dissipation loop when switches of a switch means 16 are open. Lines L1 and L2 are connected across the output of a full-wave bridge rectifier 12 which is used to rectify the 115VAC input to the motor. The bridge output and bus capacitor are commonly connected at respective nodes 14a and 14b.

To further help in understanding tail current decay, Fig. 4A illustrates a PWM gate signal in which the "on" interval of the signal is substantially less than the "off" portion of the signal. During the "on" portion, a d.c. voltage is applied to the phase winding W (see Fig. 4B). During the "off" portion of the signal, no voltage is applied to the winding. Rather, during this interval, the winding is connected in a closed-loop circuit with a diode D1 (see Fig. 4C) to produce a zero voltage current decay of the current impressed across the winding. In Fig. 5A, the signal used to produce tail current decay in the phase is also a PWM signal. Now, the "on" interval of the pulse is longer than the "off" interval. During the longer "on" interval, a switch S1 is closed to allow the winding W current to circulate through diode D1. During the "off" interval of each pulse, respective switches S1 and S2 on opposite sides of the winding are open. The winding is now connected through two diodes D1 and D2 to a bus capacitor C which is associated with the upper rail of the power input to the motor. Capacitor C is a storage capacitor which is charged with the tail decay current. With respect to Figs. 5B and 5C, Fig. 5B represents a soft chopping circuit configuration, and Fig. 5C a hard chopping circuit configuration.

Next, circuit 10 includes the switch means 16 for connecting phase winding W into a circuit including capacitor C when the phase becomes inactive. Switch means 16 includes respective first and second sets 18, 20 of switches with set 18 of switches being connected on one side of the phase winding and the set 20 of switches on the other side thereof. Both sets of switches are comprised of two semiconductor switches which are shown in Fig. 6 to be MOSFET's 22. It will be understood that other semiconductor switches could also be used without departing from the scope of the invention. In each set of switches, the pair of switches is connected in parallel, this being done to increase switching capability. Also, each MOSFET has a gate circuit which includes a resistor R3 connected in parallel with a diode D3. Each resistor R3 is, for example, a 100 ohm resistor. The input side of each pair of gate input elements is connected together at respective nodes 24a, 24b. As is described hereinafter, input signals to each set of switches is supplied through modes 24a, 24b.

A sensing means 28 is provided for sensing the motor's rotor position. Means 28 includes a Hall effect sensor 30 which operates in the conventional manner. Each set of switches has an associated power supply 32, 34. Hall effect sensor 30 is connected to the power supply 34 which is associated with set 20 of switches. Both power supplies are similar in configuration. Each power supply includes a step down transformer 36 one side of which is connected to the 115VAC input power. Rectifying diodes D4 are connected across the output side of the transformer and are commonly connected at respective nodes 38a, 38b. The transformed, rectified input voltage is then impressed across a zener diode Z1 through a resistor R4. The zener diode clamps to the input voltage to the sets of switches to 18V., for example. A filter capacitor C3 is connected in parallel across each zener diode. The resultant voltage output of power supply 32 is connected to the gate-source portion of the respectives MOSFET's 22 of switch set 18, one side of capacitor C3 being connected to node 24a on the gate input side of the set through a resistor R5. One side of capacitor C3 of power supply 34 is connected to an integrated circuit (IC) 40 of a control means 42 which controls routing of operating signals which are generated as described hereinafter. The other side of this second capacitor C3 is connected to the node 24b of switch set 20 again through a resistor R5.

Referring to Figs. 6 and 7A, a signal generating means 44 provides operating signals to switch means 16 to switch phase winding W into the circuit including bus capacitor C. As shown in Fig. 7A, means 44 includes two interconnected model number 555, IC timing chips 46a, 46b. Means 44 is connected across nodes 48, 50 of power supply 34 to provide power to the chips. Chip 46a has pins 1 and 5 which are connected together through a capacitor C4. Pins 1 and 8 of the chip are connected to one side of the power input at a node 52a, pin 1 being so connected through a capacitor C5. A voltage divider network comprising a resistor R6, potentiometer P1, and capacitor C6 extends across the power lines to signal generating means 44. Pin 6 of chip 46a is connected to one side of the potentiometer, with pin input 7 being connected to the wiper arm of the potentiometer. A diode D5 is connected across these two pins. Pin 3 of the chip is connected to the base of a transistor Q1 through a resistor R7. Pins 2 and 6 are commonly connected as are pins 4 and 8. The output of transistor Q1 is connected to pin 2 of chip 46b. This pin is also connected to the one side of the power to the signal generating means through a resistor R8. As with chip 46a, pins 1 and 8 of chip 46b are connected to one side of the power input of the signal generating means through a capacitor C7. Pin 1 is also connected to pin 5 through a capacitor C8. Pin 7 has as its input the voltage derived from a voltage divider comprising a resistor R9 and a potentiometer P2. The Pin 6 of the chip is connected to the other side of the power input through a capacitor C9. Finally, pins 6 and 7 are tied together as are pins 2 and 4.

Signal generating means 44 functions as a pulse width modulation signal generator whose output from pin 3 of chip 46b is supplied as an input of an IC 50 of control means 42. Alternatively, the operating signal can be produced by a microprocessor 52 as shown in Fig. 7B. Microprocessor 52 is programmed to control the pulse width modulation of the signal produced by means 44 as a function of various SRM operating parameters such as motor speed, torque, etc. The microprocessor is programmed with an algorithm which incorporates various monitored parameters into a calculation which determines desired characteristics (frequency, duty cycle, amplitude, etc.) of the operating signal supplied to the control means.

Control means 42 is responsive to sensing means 28 to control the operation of signal generating means 44. Both chips 40 and 50 are 14 pin chips; chip 40 having the model designation CD4001, and chip 50 the designation CD4011BE. The operating signal output of signal generating means 44 or 52 is supplied to control means 42 as an input to pin 13 of chip 50. The power to the chips is provided from node 48a to pin 14 on each chip, and from node 48b to pin 7 of each chip, Hall effect sensor 30 provides an input to commonly connected pins 8 and 9 of chip 50 and to the normally open contact 54 of a switch 56. If desired, switch 56 can be used to disengage the current control means controlling operation of circuit 10.

In addition to supplying its output to control means 42, the output of sensor 30 is also provided to the base of a transistor Q2 through the a base biasing network comprising resistors R9-R11. Transistor Q2, in turn, provides an input to an opto-isolator means 58 through a resistor R12. Means 58 includes a model 4N35 type isolator 60 one side of which draws power from power supply means 32 through a resistor R13. The opto-isolator controls switching of a transistor Q3 through a biasing resistor R14. The state of transistor Q3 controls application of power to set 18 of MOSFET switches 22. Switch set 18 is operated so that the switches are either "on" or "off". The switches are turned "on" when the phase is active, and "off" when the phase is inactive.

Control means 42 is responsive to the output of the Hall effect sensor to modify the signal characteristics of the operating signals provided by means 44 so these signals have one set of signal characteristics when the phase is active, and a different set of characteristics when the phase is inactive. Operation of control means 42 is that in response to the Hall effect sensor indicating the phase has become inactive, the control means reverses the duty cycle of the operating signal. Thus, if the operating signals, when the phase is active, is "on" 10% of a pulse period and "off" 90%, when the Hall sensor indicates the phase is now inactive, the indication provided to pins 8 and 9 of chip 50 results in the control means providing an operating signal which is "on" 90% of the time, and "off" 10%. When the phase again becomes active, the Hall sensor output causes a reversal back to the initial duty cycle conditions. It will be understood that the relative "on/off" periods at any one time may differ from those at a different period. Also, the microprocessor can override operation of the control circuit so that under certain defined motor conditions (a period range of motor speeds, for example) the control means will produce a particular set of characteristics so when the "on/off" periods are reversed, the resulting operating signal still has desired characteristics.

The inverted PWM operating signal is produced at pin 3 of chip 40. This signal is applied to the base of a transistor Q4 through a base resistor R15. The ouput of this transistor is supplied to node 24b at the gate input of the MOSFET's 22 of switch set 20. Because the operating signal has "on" and "off" portions, it effectively modulates the elements of switch set 20 so they alternately provide a hard chopping and a soft chopping interval of tail current decay. Accordingly the zero voltage, current chopping dissipation of the tail current is effected with a single set of switches producing both the hard chopping and soft chopping decay strategies described above. This is shown in Figs. 10A and 10B. At time T₁, there is an initial zero voltage soft chopping interval, followed by a shorter duration hard chopping interval. As seen in Fig. 9A, this process is repeated as the tail current is driven to zero. The longer soft chopping interval corresponds to the longer "on" interval of the operating signal, and the shorter hard chopping interval to the shorter "off" period. It will be understood that the relative intervals shown in Figs. 9A and 9B are illustrative only.

It will be appreciated from the above discussion that one set of operating characteristics of circuit 10 is a reversal of duty cycle of the operating signal for a specified PWM frequency. However, with microprocessor 52 generating PWM signals it is possible to vary either the duty cycle, frequency, or both within the tail current decay time. Referring to Figs. 11A-11D examples are presented in which the duty cycle or frequency, or both is varied so that the soft chopping and hard chopping portions of an interval are controlled over the several intervals during which the residual current decays to zero. The ability to vary both frequency and duty cycle is important because it provides a greater degree of control over the current slope which permits better noise control over the motor during residual current decay. In the control scheme of Fig. 11A, there is a constant duty cycle of the PWM operating signal during each interval I. Accordingly, the "on" portion of each duty cycle is constant throughout the current decay period T₁-T₂.

In Fig. 11B, the interval I is constant; however; the duty cycle is varied from one interval to the next. This, for example effects a soft chopping portion which gets progressively shorter during succeeding intervals while the hard chopping portion becomes progressively longer.

In Fig. 11C, the intervals are variable in duration so that interval I₁, is longer the interval I₂, etc. However, the duty cycle is constant so that even though the soft and hard chopping portions of each interval are of different lengths, this ratio is constant over the entire current decay period.

Finally, in Fig. 11D, both the interval I and duty cycle of the PWM operating signals are variable. As noted, the particular PWM characteristics selected to control current decay are a function of the particular SRM operating conditions and as such the chosen set of characteristics may be employed each time the phase become inactive, or a different set may be chosen each time.

Regardless of the actual intervals at which hard chopping and soft chopping occur, the frequency of the signals may be at least twice the resonant frequency of the motor. This prevents noise from being created due to harmonics within the motor frame. It has been found that the effect of circuit 10, in addition to efficiently producing tail current decay is to reduce the motor noise by approximately 10dBA from a level of some 50dB. Further, it has been found that circuit 10 is usable with a variety of SRM's, including 2- phase and 3-phase SRM's.

What has been described is a control circuit for controlling tail current decay in a SRM. The circuit operates to control tail current decay so as to lessen motor noise at least 10dB from the 50dB levels currently found in SRM's. As shown by the dashed line curve in Fig. 10, the motor ringing which occurs when circuit 10 is used is substantially reduced from the previous level of ringing. To accomplish this, the control circuit combines both hard chopping and soft chopping current decay control techniques, doing so with but a single gate drive. The control circuit is usable with both 2-phase and 3-phase SRM's including 12-6, 2-phase SRM's, and 6-4, 3-phase SRM's. The control circuit is readily incorporated into a PWM type controller for controlling overall phase switching between the respective phases of a SRM. As part of its operation, the control circuit which reverses the pulse width of generated PWM signals used to control current flow when a phase is inactive, this helping drive the tail current to zero while the phase is inactive. The control circuit employs two sets of switches; one set being either activated or deactivated as the motor phases are switched, and the other set of which is modulated by PWM signals. It is a feature of the control circuit to reverse the "on" and "off"portions of the PWM signals when a phase is switched from active to inactive. The control circuit switches the phase winding into a path including a bus capacitor which is charged by the tail current using the PWM modulation of the switches. The tail current control circuit is particularly effective in reducing noise in SRM's operating at low speed/high torque because normal ovalizing forces which produce noise in SRM's are lower at high speed motor operation. This is because the control circuit varies both frequency and duty cycle to effect a desired soft chopping/hard chopping strategy. Also, the control circuit operates at a frequency at least twice the resonant frequency of the motor. Finally, the control circuit provides a low cost, reliable way of reducing noise throughout the range of SRM operation.

In view of the foregoing, it will be seen that the several objects of the invention are achieved and other advantageous results are obtained.

As various changes could be made in the above constructions without departing from the scope of the invention, it is intended that all matter contained in the above description or shown in the accompanying drawings shall be interpreted as illustrative and not in a limiting sense.

## Claims

1. A circuit for controlling residual current decay in a single or polyphase switched reluctance motor having at least one phase winding (W) to which current is supplied when it is active, and is otherwise inactive, the circuit comprising:
sensing means (28) for producing an output indicative of whether the phase is active or inactive;
switch means (16) for directing current flow into the winding (W) when the phase is active and for alternately switching the winding (W) between an energy recovery circuit (C) and a recirculation circuit (D1/S1, D2/S2) when the phase is inactive;
signal generating means (44,50) providing an operating signal to the switch means (16) to control current flow and recovery or recirculation; and
control means (42) responsive to the output of the sensing means (28) for controlling the signal generating means (44,50) to provide operating signals having operating characteristics which differ when a phase is active and when it is inactive, thereby to alternately switch the winding (W) between said energy recovery circuit (C) and said recirculation circuit (D1/S1, D2/S2) when the phase becomes inactive, the control means (42) effecting frequency and/or duty cycle of the operating signals to control the rate of decay of the current and consequently motor noise.

2. The circuit of claim 1 wherein the switch means (16) is coupled to a voltage source (L1, L2) and the winding (W) for controlling the application of voltage to the winding (W); and wherein the control means (42) is adapted to provide a series of pulsed gating signals to the switch means (16) such that the voltage applied to the winding (W) during the period of current decay repeatedly varies from a negative voltage magnitude to approximately zero volts.

3. The circuit of claim 1 wherein the switch means (16) is coupled to a voltage source (L1, L2) and the winding (W) for controlling the application of voltage to the winding (W); wherein the control means (42) controls the switch means (16) such that the voltage applied to the winding (W) during the interval of residual current decay comprises repeated periods of differing voltage levels having a magnitude that is selected from at least one of the following values: (i) the negative of the DC voltage provided by the DC voltage source; or (ii) the voltage established by connecting the phase winding (W) in a closed-loop circuit with a semiconductor device (D1, D2).

4. The circuit of claim claim 1 further comprising:
a capacitor (C) connected in series with the winding (W) and charged by the current in the winding (W) when the phase becomes inactive thereby to recover a portion of the energy; and
wherein the signal generating means includes a PWM signal generator, the control means (42) reversing the pulse width of the operating signals produced by the PWM signal generator when the phase becomes inactive from the pulse width of the operating signals which are produced when the phase is active.

5. The circuit of claim 1 further comprising:
a capacitor (C) for storing energy recovered from the winding (W);
power dissipation means (D1, D2) connected with the phase winding (W);
wherein the signal generating means (44, 50) provides an operating signal to the switch means (16) to alternately switch the winding (W) into a circuit including the capacitor (C) and a circuit including the power dissipation means (D1, D2), the operating signals being used to modulate the state of the switch means (16) to provide both a hard chopping and a soft chopping of the current; and
wherein the control means (42) controls operation of the signal generating means (44, 50) to provide operating signals having one set of signal characteristics when a phase is active, and a different set of characteristics when the phase is inactive so to produce the zero voltage, energy recovery and dissipation of the tail current, the control circuit (42) controlling both the frequency and duty cycle of the operating signals to effect the recovery and dissipation of the tail current and reduce motor noise.

6. The circuit of claim 1 wherein the switch means (16) comprises a first set of switches (18) and a second set (20) thereof, said sets of switches being on respective sides of the winding (W) with one set of switches being activated when the phase is active, and deactivated when the phase is inactive.

7. A method of decaying the residual current in a winding (W) of a single or polyphase SRM, current being supplied to the winding (W) when the phase is active and the residual current being the current remaining in the winding (W) when the phase become inactive, the method comprising:
switching the winding (W) between a first circuit which is an energy recovery circuit to recover a portion of the energy represented by the residual current and a second circuit which is an energy dissipation circuit which dissipates a portion of the energy represented by the residual current;
controlling the switching of the winding (W) between the energy recovery and energy dissipation circuits in a controlled manner by which the residual current is decayed to zero so as to cause minimal ringing in the motor and thereby reduce motor noise, controlling switching of the winding (W) including switching the winding between the circuits over a plurality of intervals with the winding being switched into one circuit for a portion of each interval and into the other circuit the remainder of the interval, both the duration of each interval and the portion thereof in which the winding is switched into one circuit or the other being variable in a predetermined manner.

8. The method of claim 7 wherein the step of controlling the switching of the winding includes:
controlling the application of electrical power to the phase winding (W) during the period of residual current decay such that the current in the phase winding decreases from the a positive value to zero through two or more decay intervals, where the slope of the current decay varies over each decay interval.

9. The method of claim 7 wherein the step of controlling the switching of the winding includes the steps of:
(i) applying a negative voltage to the winding over a first decay interval; and
(ii) applying a voltage resulting from connecting the winding (W) in a closed-loop circuit with a semiconductor device (D1, D2) over a second decay interval; wherein the slope of the current decay over the second decay interval is less than the slope of the current decay over the first decay interval.

10. The method of claim 7 wherein the step of controlling the switching of the winding (W) includes applying a series of pulse width modulated voltage pulses to the phase winding.

11. The method of claim 7 wherein the step of controlling the switching of the winding includes:
applying a plurality of periods of differing voltage levels to the winding (W) during the period of residual current decay, where the periods of differing voltage levels have a magnitude selected from the group of: (i) a negative DC voltage or (ii) the voltage resulting from connecting the phase winding (W) in a closed-loop circuit with a semiconductor device (D1, D2); and
wherein the application of the plurality of differing voltage levels applied to the phase winding (W) is controlled to reduce the amount of noise produced by the machine.

12. The method of claim 11 wherein the plurality of periods of differing voltage levels applied to the winding (W) includes periods of voltage levels having both a negative DC voltage magnitude and a voltage magnitude resulting from connecting the phase winding (W) in a closed-loop circuit with a semiconductor device (D1, D2).

13. The method of claim 11 wherein: (i) the SRM includes at least one resonant frequency; and (ii) applying a plurality of periods of differing voltage levels to the winding (W) includes the step of applying the plurality of periods of differing voltage at a frequency that is at least twice the resonant frequency of the machine.

14. The method of claim 11 wherein applying a plurality of periods of differing voltage levels to the winding (W) includes the step of varying the frequency at which the plurality of periods of differing voltage are applied to the winding (W).

15. The method of claim 11 wherein applying a plurality of periods of differing voltage levels to the winding (W) includes varying the duty cycle of the plurality of periods of differing voltage applied to the phase winding (W).

16. The method of claim 11 wherein applying a plurality of periods of differing voltage levels to the winding (W) includes: (i) varying the frequency at which the plurality of periods of differing voltage are applied to the winding (W) and (ii) varying the duty cycle of the plurality of periods of differing voltage applied to the winding (W).

## Patentansprüche

1. Schaltung zur Steuerung eines Reststromabfalls in einem einzel- oder mehrphasig geschalteten Reluktanzmotor, welcher wenigstens eine einphasige Wicklung (W) aufweist, an welcher, wenn sie aktiv ist, ein Strom anliegt und andernfalls inaktiv ist, wobei die Schaltung aufweist:
ein Bestimmungsmittel (28), zum Erzeugen einer Ausgabe, welche anzeigt, ob die Phase aktiv oder inaktiv ist,
ein Schaltmittel (16), um einen Stromfluss in die Wicklung (W) zu leiten, wenn die Phase aktiv ist, und um andernfalls die Wicklung (W) zwischen eine Energieabfangschaltung (C) und eine Freilaufschaltung (D1/S1, D2/S2) zu schalten, wenn die Phase inaktiv ist,
ein Signalerzeugungsmittel (44, 50), um ein Betriebssignal an das Schaltmittel (16) zur Steuerung des Stromflusses und des Abfangens oder des Freilaufs zu liefern und
ein Steuerungsmittel (42), welches für die Ausgabe des Bestimmungsmittels (28) verantwortlich ist, um die signalerzeugenden Mittel (44, 50) zum Erzeugen eines Betriebssignals zu steuern, welches Betriebscharakteristiken aufweist, welche unterschiedlich sind, wenn eine Phase aktiv und wenn sie inaktiv ist, und dabei abwechselnd die Wicklung (W) zwischen die Energieabfangschaltung (C) und die Freilaufschaltung (D1/S1, D2/S2) zu schalten, wenn die Phase inaktiv wird, wobei das Steuerungsmittel (42) die Frequenz und/oder das Einschaltverhältnis des Betriebssignals zur Steuerung der Abfallsrate des Stroms und folglich des Motorengeräusches beeinflusst.

2. Schaltung nach Anspruch 1, **dadurch gekennzeichnet, dass** das Schaltungsmittel (16) mit einer Spannungsquelle (L1, L2) und der Wicklung (W) zur Steuerung der Anwendung von Spannung auf die Wicklung (W) verbunden ist und dass das Steuerungsmittel (42) vorgesehen ist, um eine Reihe von gepulsten Gate-Signalen an das Schaltungsmittel (16) zu liefern, so dass die an der Wicklung (W) angewendete Spannung während der Zeitdauer des Stromabfalls wiederholt von einer negativen Spannungsgröße auf ungefähr null Volt variiert.

3. Schaltung nach Anspruch 1, **dadurch gekennzeichnet, dass** das Schaltmittel (16) mit einer Spannungsquelle (L1, L2) und der Wicklung (W) zur Steuerung der Anwendung von Spannung auf die Wicklung (W) verbunden ist, wobei das Steuerungsmittel (42) das Schaltmittel (16) derart steuert, dass die an der Wicklung (W) angelegte Spannung während des Intervalls des Reststromabfalls wiederholte Zeitdauern von unterschiedlichen Spannungsleveln mit einer Größe aufweist, welche aus wenigstens einem der folgenden Werte ausgewählt ist: (i) dem Negativen der Gleichstrom-Spannung, welche durch die Gleichstrom-Spannungsquelle geliefert wird, oder (ii) der Spannung, welche durch Verbinden der einphasigen Wicklung (W) in einer geschlossenen Ringschaltung mit einer Halbleitervorrichtung (D1, D2) festgesetzt wird.

4. Schaltung nach Anspruch 1, welche des weiteren aufweist:
eine mit der Wicklung (W) in Reihe geschaltete Kapazität (C), welche durch den Strom in der Wicklung (W) geladen wird, wenn die Phase inaktiv wird, wobei ein Teil der Energie abgefangen wird und
wobei das signalerzeugende Mittel einen PWM-Signalerzeuger beinhaltet, das Steuerungsmittel (42) die Pulsweite des durch den PWM-Signalerzeuger erzeugten Betriebssignals bei inaktiv werdender Phase von der Pulsweite des Betriebssignals, welches bei aktiver Phase erzeugt wird, umkehrt.

5. Schaltung nach Anspruch 1, des weiteren aufweisend:
eine Kapazität (C) zum Speichern von der Wicklung (W) abgefangener Energie,
Mittel (D1, D2) zum Verbrauch von Energie, welche mit der einphasigen Wicklung (W) verbunden sind,
**dadurch gekennzeichnet,**
**dass** die signalerzeugenden Mittel (44, 50) dem Schaltmittel (16) ein Betriebssignal liefern, um abwechselnd die Wicklung (W) in eine die Kapazität (C) beinhaltende Schaltung und eine die Mittel (D, W) zum Verbrauch von Energie beinhaltende Schaltung zu schalten, wobei die Betriebssignale zum Modulieren des Zustandes des Schaltmittels (16) genutzt werden, um sowohl ein hartes Zerhacken als auch ein weiches Zerhacken des Stromes vorzusehen und
**dass** das Steuerungsmittel (42) den Betrieb der signalerzeugenden Mittel (44, 50) steuert, um Betriebssignale zu ermöglichen, welche einen Satz von Signalcharakteristika bei aktiver Phase und einen anderen Satz Charakteristiken bei inaktiver Phase aufweisen, um die Nullspannung, den Energieabfang und den Verbrauch des Stromschwanzes zu erzeugen, wobei die Steuerungsschaltung (42) sowohl die Frequenz als auch das Einschaltverhältnis der Betriebssignale steuert, um den Abfang und den Verbrauch des Endstromes hervorzurufen und das Motorengeräusch zu reduzieren.

6. Schaltung nach Anspruch 1, **dadurch gekennzeichnet, dass** das Schaltmittel (16) einen ersten Satz (18) und einen zweiten Satz (20) Schalter aufweist, wobei sich die Schalter auf entsprechenden Seiten der Wicklung (W) befinden und ein Satz der Schalter bei aktiver Phase aktiviert ist und bei inaktiver Phase deaktiviert ist.

7. Verfahren zum Abklingen des Reststroms in einer Wicklung (W) eines einzel- oder mehrphasig geschalteten Reluktanzmotors, wobei an der Wicklung (W) bei aktiver Phase Strom anliegt und der Reststrom der bei inaktiv werdender Phase in der Wicklung (W) verbleibende Strom ist, wobei das Verfahren aufweist:
Schalten der Wicklung (W) zwischen einer ersten Schaltung, welche eine Energieabfangschaltung ist, um einen Teil der durch den Reststrom dargestellten Energie wiederzugewinnen und einer zweiten Schaltung, welche eine Schaltung zum Energieverbrauch ist und einen Teil der durch den Reststrom dargestellten Energie verbraucht,
Steuern des Schaltens der Wicklung (W) zwischen den Schaltungen zum Energieabfang und zum Energieverbrauch in einer gesteuerten Weise, wodurch der Reststrom auf Null abklingt, so dass in dem Motor ein minimales Tönen verursacht wird und dadurch das Geräusch des Motors verringert wird, wobei das Steuern des Schaltens der Wicklung (W) das Schalten der Wicklung zwischen den Schaltungen über eine Vielzahl von Intervallen beinhaltet, wobei die Wicklung für einen Teil jeden Intervalls in die eine Schaltung und für den verbleibenden Teil des Intervalls in die andere Schaltung geschaltet wird, wobei sowohl die Dauer jeden Intervalls als auch dessen Teil, in welchem die Wicklung in die eine Schaltung oder die andere geschaltet ist, in einer vorbestimmten Weise veränderbar ist.

8. Verfahren nach Anspruch 7, **dadurch gekennzeichnet, dass** der Schritt des Steuerns des Schaltens der Wicklung beinhaltet:
Steuern des Anlegens von elektrischer Energie auf die einphasige Wicklung (W) während des Zeitraums des Abklingens des Reststroms, so dass der Strom in der einphasigen Wicklung von einem positiven Wert über zwei oder mehr Abklingintervalle auf Null absinkt, wobei der Abfall des Abklingstroms sich über jedem Abklingintervall verändert.

9. Verfahren nach Anspruch 7, **dadurch gekennzeichnet, dass** der Schritt des Steuerns des Schaltens der Wicklung die Schritte beinhaltet:
(i) Anlegen einer negativen Spannung an die Wicklkung während eines ersten Abklingintervalls und
(ii) während eines zweiten Abklingintervalls Anlegen einer Spannung, welche aus dem Verbinden der Wicklung (W) mit einer Halbleitervorrichtung (D1, D2) in einer geschlossenen Ringschaltung hervorgeht, wobei der Abfall des Abklingstroms während des zweiten Abklingintervalls geringer ist als der Abfall des Abklingstroms während des ersten Abklingintervalls.

10. Verfahren nach Anspruch 7, **dadurch gekennzeichnet, dass** der Schritt des Steuerns des Schaltens der Wicklung (W) das Anlegen einer Reihe von Spannungspulsen mit modulierter Pulsweite an die einphasige Wicklung beinhaltet.

11. Verfahren nach Anspruch 7, **dadurch gekennzeichnet, dass** der Schritt des Steuerns des Schaltens der Wicklung beinhaltet:
Anlegen einer Vielzahl von Zeitdauern unterschiedlicher Spannungslevel an die Wicklung (W) während der Zeitspanne des Reststromabfalls, wobei die Zeitdauern der unterschiedlichen Spannungslevel eine Größe aufweisen, welche aus der Gruppe (i) einer negativen Gleichstromspannung oder (ii) der aus dem Verbinden der einphasigen Wicklung (W) mit einer Halbleitervorrichtung (D1, D2) in einer geschlossenen Ringschaltung resultierenden Spannung ausgewählt ist und
wobei das Anlegen der Vielzahl von unterschiedlichen Spannungsleveln an die einphasige Wicklung (W) gesteuert wird, um die Menge des durch die Maschine erzeugten Geräusches zu reduzieren.

12. Verfahren nach Anspruch 11, **dadurch gekennzeichnet, dass** die Vielzahl der Zeitdauern der unterschiedlichen an die Wicklung (W) angelegten Spannungslevel Zeitdauem mit Spannungsleveln beinhalten, welche sowohl eine negative Gleichstromspannungsgröße als auch eine Spannungsgröße aufweisen, welche aus dem Verbinden der einphasigen Wicklung (W) mit einer Halbleitervorrichtung (D1, D2) in einer geschlossenen Ringschaltung resultiert.

13. Verfahren nach Anspruch 11, **dadurch gekennzeichnet, dass** (i) der geschaltete Reluktanzmotor wenigstens eine Resonanzfrequenz beinhaltet und (ii) das Anwenden einer Vielzahl von Zeitdauern von unterschiedlichen Spannungsleveln auf die Wicklung (W) den Schritt des Anlegens der Zeitdauern der unterschiedlichen Spannung bei einer Frequenz beinhaltet, welche wenigstens der doppelten Resonanzfequenz der Maschine entspricht.

14. Verfahren nach Anspruch 11, **dadurch gekennzeichnet, dass** das Anlegen einer Vielzahl von Zeitspannen unterschiedlicher Spannungslevel an die Wicklung (W) den Schritt des Veränderns der Frequenz beinhaltet, bei welcher die Vielzahl der Zeitspannen unterschiedlicher Spannung an der Wicklung (W) angelegt werden kann.

15. Verfahren nach Anspruch 11, **dadurch gekennzeichnet, dass** das Anlegen einer Vielzahl von Zeitspannen unterschiedlicher Spannungslevel an die Wicklung (W) das Ändern des Einschaltverhältnisses der Vielzahl von Zeitspannen unterschiedlicher Spannung, welche an die einphasige Wicklung (W) angelegt werden, beinhaltet.

16. Verfahren nach Anspruch 11, **dadurch gekennzeichnet, dass** das Anlegen einer Vielzahl von Zeitspannen unterschiedlicher Spannungslevel an die Wicklung (W) beinhaltet:
(i) Variieren der Frequenz, an welcher die Vielzahl der Zeitspannen unterschiedlicher Spannung an die Wicklung (W) angewendet werden, und
(ii) Variieren des Arbeitsspiels der Vielzahl von Zeitspannen unterschiedlicher Spannung, welche an die Wicklung (W) angelegt werden.

## Revendications

1. Circuit pour commander une chute de courant résiduel dans un moteur à réluctance commutée monophasé ou polyphasé comprenant au moins un enroulement de phase (W) auquel du courant est fourni lorsqu'il est actif, et qui est inactif dans le cas contraire, le circuit comprenant:
un moyen de détection (28) pour produire une sortie indiquant si la phase.est active ou inactive;
un moyen de commutation (16) pour diriger un flux de courant dans l'enroulement (W) lorsque la phase est active et pour commuter alternativement l'enroulement (W) entre un circuit de récupération d'énergie (C) et un circuit de recirculation (D1/S1, D2/S2) lorsque la phase est inactive;
un moyen de génération de signal (44, 50) qui envoie un signal de commande au moyen de commutation (16) pour commander un flux de courant et une récupération ou une recirculation; et
un moyen de commande (42) sensible à la sortie du moyen de détection (28) pour commander au moyen de génération de signal (44, 50) d'envoyer des signaux de commande présentant des caractéristiques de commande qui diffèrent lorsqu'une phase est active et lorsqu'une phase est inactive, afin de commuter ainsi alternativement l'enroulement (W) entre ledit circuit de récupération d'énergie (C) et ledit circuit de recirculation (D1/S1, D2/S2) lorsque la phase devient inactive, le moyen de commande (42) exécutant un cycle de fréquence et/ou un cycle opératoire des signaux de commande afin de contrôler la vitesse de la chute du courant et par conséquent le bruit du moteur.

2. Circuit selon la revendication 1 dans lequel le moyen de commutation (16) est couplé à une source de tension (L1, L2) et à l'enroulement (W) pour commander l'application d'une tension à l'enroulement (W); et dans lequel le moyen de commande (42) est apte à générer une série de signaux déclencheurs pulsés au moyen de commutation (16) de telle sorte que la tension appliquée à l'enroulement (W) durant la période de la chute du courant varie d'une façon répétée entre une grandeur de tension négative et approximativement zéro volt.

3. Circuit selon la revendication 1 dans lequel le moyen de commutation (16) est couplé à une source de tension (L1, L2) et à l'enroulement (W) pour commander l'application d'une tension à l'enroulement (W); dans lequel le moyen de commande (42) commande le moyen de commutation (16) de telle sorte que la tension appliquée à l'enroulement (W) durant l'intervalle de chute du courant résiduel comprenne des périodes répétées de niveaux de tension différents présentant une grandeur qui est choisie parmi au moins une des valeurs suivantes: (i) la valeur négative de la tension continue fournie par la source de tension continue; ou (ii) la tension établie en connectant l'enroulement de phase (W) dans un circuit en boucle fermée avec un dispositif semi-conducteur (D1, D2).

4. Circuit selon la revendication 1, comprenant en outre:
un condensateur (C) connecté en série avec l'enroulement (W) et chargé par le courant dans l'enroulement (W) lorsque la phase devient inactive pour récupérer ainsi une partie de l'énergie; et
dans lequel le moyen de génération de signal comprend un générateur de signal PWM (de modulation en largeur d'impulsion), le moyen de commande (42) inversant la largeur d'impulsion des signaux de commande produits par le générateur de signal PWM lorsque la phase devient inactive à partir de la largeur d'impulsion des signaux de commande qui sont produits lorsque la phase est active.

5. Circuit selon la revendication 1, comprenant en outre:
un condensateur (C) pour stocker l'énergie récupérée à partir de l'enroulement (W);
un moyen de dissipation de puissance (D1, D2) connecté à l'enroulement de phase (W);
dans lequel le moyen de génération de signal (44, 50) envoie un signal de commande au moyen de commutation (16) afin de commuter alternativement l'enroulement (W) dans un circuit comprenant le condensateur (C) et dans un circuit comprenant le moyen de dissipation de puissance (D1, D2), les signaux de commande étant utilisés pour moduler l'état du moyen de commutation (16) afin de réaliser un hachage dur et un hachage doux du courant; et
dans lequel le moyen de commande (42) commande l'activation du moyen de génération de signal (44, 50) pour envoyer des signaux de commande présentant un premier ensemble de caractéristiques de signal lorsqu'une phase est active, et un ensemble différent de caractéristiques lorsque la phase est inactive de manière à produire la tension zéro, la récupération d'énergie et la dissipation du courant de queue, le circuit de commande (42) commandant à la fois le cycle de fréquence et le cycle opératoire des signaux de commande pour exécuter la récupération et la dissipation du courant de queue et réduire le bruit du moteur.

6. Circuit selon la revendication 1 dans lequel le moyen de commutation (16) comprend un premier ensemble de commutateurs (18) et un deuxième ensemble de commutateurs (20), lesdits ensembles de commutateurs étant situés sur des côtés respectifs de l'enroulement (W), un ensemble de commutateurs étant activé lorsque la phase est active, et désactivé lorsque la phase est inactive.

7. Procédé pour faire chuter le courant résiduel dans un enroulement (W) d'un machine à réluctance commutée (SRM) monophasée ou biphasée, un courant étant fourni à l'enroulement (W) lorsque la phase est active, et le courant résiduel étant le courant qui reste dans l'enroulement (W) lorsque la phase devient inactive, le procédé comprenant:
la commutation de l'enroulement (W) entre un premier circuit qui est un circuit de récupération d'énergie destiné à récupérer une partie de l'énergie représentée par le courant résiduel, et un deuxième circuit qui est un circuit de dissipation d'énergie qui dissipe une partie de l'énergie représentée par le courant résiduel;
la commande de la commutation de l'enroulement (W) entre les circuits de récupération d'énergie et de dissipation d'énergie d'une manière contrôlée selon laquelle le courant résiduel est entraîné à chuter jusqu'à zéro de manière à provoquer un vrombissement minimal du moteur et à réduire ainsi le bruit du moteur, la commande de la commutation de l'enroulement (W) comprenant la commutation de l'enroulement entre les circuits sur une pluralité d'intervalles, l'enroulement étant commuté dans un premier circuit pendant une partie de chaque intervalle et dans l'autre circuit pendant le reste de l'intervalle, tant la durée de chaque intervalle que la partie de celui-ci pendant laquelle l'enroulement est commuté dans un circuit ou dans l'autre pouvant varier d'une manière prédéterminée.

8. Procédé selon la revendication 7 dans lequel l'étape de commande de la commutation de l'enroulement comprend:
la commande de l'application d'un courant électrique à l'enroulement de phase (W) durant la période de chute du courant résiduel de telle sorte que le courant dans l'enroulement de phase diminue en passant d'une valeur positive à zéro via deux intervalles de chute ou plus, dans lequel la pente de la chute du courant varie lors de chaque intervalle de chute.

9. Procédé selon la revendication 7 dans lequel l'étape de commande de la commutation de l'enroulement comprend les étapes suivantes :
(i) application d'une tension négative à l'enroulement lors d'un premier intervalle de chute; et
(ii) application d'une tension résultant de la connexion de l'enroulement (W) dans un circuit en boucle fermée avec un dispositif semi-conducteur (D1, D2) lors d'un deuxième intervalle de chute;
dans lequel la pente de la chute du courant lors du deuxième intervalle de chute est inférieure à la pente de la chute du courant lors du premier intervalle de chute.

10. Procédé selon la revendication 7 dans lequel l'étape de commande de la commutation de l'enroulement (W) comprend l'application d'une série d'impulsions de tension modulées en largeur d'impulsion à l'enroulement de phase.

11. Procédé selon la revendication 7 dans lequel l'étape de commande de la commutation de l'enroulement comprend:
l'application d'une pluralité de périodes de niveaux de tension différents à l'enroulement (W) durant la période de chute du courant résiduel, dans lequel les périodes de niveaux de tension différents présentent une grandeur sélectionnée parmi le groupe suivant: (i) une tension continue négative ou (ii) la tension résultant de la connexion de l'enroulement de phase (W) dans un circuit en boucle fermée avec un dispositif semi-conducteur (D1, D2); et
dans lequel l'application de la pluralité de niveaux de tension différents appliqués à l'enroulement de phase (W) est commandée de manière à réduire la quantité de bruit produit par la machine.

12. Procédé selon la revendication 11 dans lequel la pluralité de périodes de niveaux de tension différents appliqués à l'enroulement (W) comprend des périodes de niveaux de tension présentant à la fois une grandeur de tension continue négative et une grandeur de tension résultant de la connexion de l'enroulement de phase (W) dans un circuit en boucle fermée avec un dispositif semi-conducteur (D1, D2).

13. Procédé selon la revendication 11 dans lequel: (i) la machine à réluctance commutée comprend au moins une fréquence de résonance; et (ii) l'application d'une pluralité de périodes de niveaux de tension différents à l'enroulement (W) comprend l'étape consistant à appliquer la pluralité de périodes de tension différente à une fréquence qui est au moins égale à deux fois la fréquence de résonance de la machine.

14. Procédé selon la revendication 11 dans lequel l'application d'une pluralité de périodes de niveaux de tension différents à l'enroulement (W) comprend l'étape consistant à faire varier la fréquence à laquelle la pluralité de périodes de tension différente sont appliquées à l'enroulement (W).

15. Procédé selon la revendication 11 dans lequel l'application d'une pluralité de périodes de niveaux de tension différents à l'enroulement (W) comprend la variation du cycle opératoire de la pluralité de périodes de tension différente appliquées à l'enroulement de phase (W).

16. Procédé selon la revendication 11 dans lequel l'application d'une pluralité de périodes de niveaux de tension différents à l'enroulement (W) comprend: (i) la variation de la fréquence à laquelle la pluralité de périodes de tension différente sont appliquées à l'enroulement (W); et (ii) la variation du cycle opératoire de la pluralité de périodes de tension différente appliquées à l'enroulement (W).
